# EUROPEAN PATENT APPLICATION

(11) **EP 1 758 037 A2**
(43) Date of publication of application: **28.02.2007**
(21) Application number: 06254478.8
(22) Date of filing: 29.08.2006
(51) Int. Cl.: G06F 17/30

(54) **Time-range locking for temporal databases and branched-and-temporal databases**

(30) Priority: 26.08.2005 US 213258
(71) Applicant: Centric Software, Inc., San Jose, CA 95119-1212 (US)
(72) Inventor: Goldring, Robert David, Morgan Hill, CA 95037 (US); Gorvitovskiy, Yuriy Gennadyevich, Cupertino, CA 95014 (US)
(74) Representative: Brown, George Laurence

(57) **Abstract**

A method of accessing a version of a row in a temporal database includes checking at least a timestamp associated with the version of the row against a lock criteria for the row. Based on a result of the checking step, it is determined whether to access the version of the row. The version of the row is accessed without acquiring a lock for the row. Lock criteria include time range lock period.

## Description

The present invention is in the field of temporal databases and, more particularly, relates to updating and reading rows of a temporal database.

Tables in a relational database are characterized by, among other factors, the presence of a primary key column or columns. The primary key value for a row in a table, in the primary key column, uniquely identifies that row. Thus, every row in a relational database is uniquely identified by a primary key value. Deletions and updates to a relational table destroy old information, leaving only the most current row versions and/or omitting deleted rows. This type of database is sometimes referred to as a current-version database.

On the other hand, a temporal database is typically implemented as a variant of a relational database. A temporal database adds the dimension of time to relational tables. In a temporal database, each row is uniquely identified by a primary key value (like a current-version database), but each row is further qualified by time. Updates to a temporal database retain previous data values, identifying the prior versions of data (i.e., the prior row versions) as being older than current row versions. Thus, each row may have one or more versions.

One conventional temporal database implementation model is the valid-time table structure, which has two timestamp columns not typically present in current-version relational tables. The two timestamp values for a row version identify the starting and ending points (starting and ending timestamps, respectively) of a period of validity for that row version. The presence of both timestamps in each row version is considered both convenient and efficient for indexing and query evaluation.

Typically, then, temporal databases are queried "as of" a point in time. A row version in a valid-time table satisfies an "as of" query criteria if the "as of" time falls within the period characterized by the starting and ending timestamps for the row version. The row version containing both starting and ending timestamps can be thus evaluated on its own, without references to any prior or succeeding versions of the row. A deleted row is represented as all versions of the row having an ending point in the past (i.e., the omission of any current version of the row).

It is believed that the benefits of the valid-time structure generally outweigh the storage overhead of having two timestamps for each row version, even though the ending timestamp for each row version is often the same as the beginning timestamp for the succeeding row version. Thus, as the number of row versions increase, the number of redundant timestamps approaches fifty percent of the total number of beginning and ending period timestamps.

A method of accessing a version of a row in a temporal database includes checking at least a timestamp associated with the version of the row against a lock criteria for the row. Based on a result of the checking step, it is determined whether to access the version of the row. The version of the row is accessed without acquiring a lock for the row.

Embodiments of the present invention will now be described by way of example with reference to the accompanying drawings, in which:
Figure 1 is an abstract, incomplete illustration of a table in a temporal database.
Figure 2 illustrates an example time-range lock entry.
Figure 3 illustrates an example with a child branch created off a root branch at time Tx.
Figure 4 illustrates the Figure 2 example time-range lock entry, modified to include a foreign key reference to the Figure 3 child branch.

We now discuss some properties of temporal databases by illustrating examples of interactions with an illustrative temporal database. First, it is noted that, when and if a succeeding version of a row is to be inserted into the database, the ending timestamp of the now-current (and soon-to-be previous) version of the row is updated to a timestamp no later than the starting time of the succeeding version of the row. Being implemented in a relational database, both row versions, the previous row version and the new row version, are locked by the updater for the duration of the transaction creating the new row version.

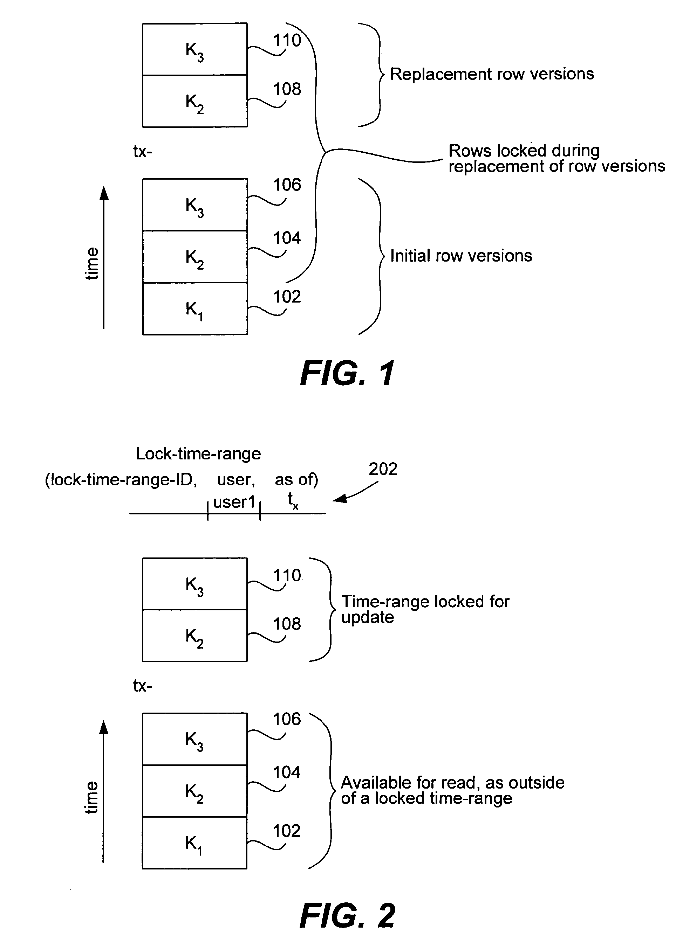

The concept of locking row versions for the duration of a new version creation transaction (and some associated pitfalls therewith) is discussed with reference to Figure 1. Figure 1 is an abstract, incomplete illustration of a table in a temporal database. An initial transaction has inserted three rows 102, 104 and 106 in the table with primary key values (K₁, K₂, K₃), committing these inserts before time tx. Subsequently, after time tx, new versions 108, 110 of the rows with primary keys (K₂, K₃) are inserted. This second transaction (i.e., to insert new versions of the rows with primary keys (K₂, K₃)) then locks four rows (i.e., rows 104, 106, 108 and 110) in the table -- all the rows shown except for the row 102 with primary key value K₁. That is, the second transaction locks all versions of the rows having a new version being added.

Continuing with the example discussed above with respect to Figure 1, while the second transaction is in progress, the row 102 with primary key value K₁ remains unlocked and is presumed available for reading in some circumstances. However, a request to read rows 104, 106, 108 and/or 110 with either primary key K₂ or primary key K₃ along with the K₁ row 102, results in the reader being forced to wait until transactions affecting the primary key values (K₂ and/or K₃) commit and the updater releases the locks of the rows having the primary key values (K₂ and/or K₃).

Furthermore, when the read eventually does occur, the read itself locks the rows being read. Thus, subsequent updating transactions are in turn delayed until the readers release their locks. The concurrency potential of the temporal database, then, may be considered reduced to that of the current-version database. Perhaps surprisingly, the presence of so much redundant data does not by itself necessarily translate into increased concurrency, because transactions updating the temporal database are acquiring and holding possibly twice the number of row locks that would be held when updating a current-version database.

An alternative is provided to relying on row locks for concurrency control in a temporal database, increasing concurrency. The row-locking and unlocking behavior is not necessarily disabled. Rather, the locking activity of the underlying relational database is "tolerated."

To support reading of a current row version concurrent with a subsequent versions of the row being generated, the concept of a time-range lock is introduced. In one example, a table is provided containing a single timestamp column for a row indicating the start of the lock period, and the lock period end is always assumed to be "forever." In an alternative example, the lock period ending timestamp is stored as well as the lock period starting timestamp. The lock period is not associated with particular primary key values *per se.* (Rather, the lock period applies to row versions associated with a particular branch. The concept of branching is discussed later.)

With the time-range locking table in place, updating transactions begin by posting a row version that is within the period of a locked time-range. A row version "within" the period of a locked time-range lock is considered unavailable for normal reading. (What is "within" in some examples is discussed later.) The updating transaction has responsibility for later removing the posted time-range lock. If the time-range is already posted as locked, the updating transaction posts an additional time-range lock entry, similarly taking responsibility for removing it later.

For example, Fig. 2 illustrates a locked time-range entry 202 appropriate for insertion of the updated row versions 108, 110 of Fig. 1. The locked time-range is posted for the row versions 108 and 110. The entry 202, in the example, includes fields for a lock time range ID, a user ID and an "as of" time for the lock.

In order to process concurrently with updaters, readers not only avoid waiting for row locks to be released, but readers also avoid acquiring database read locks. That is, with respect to avoiding waiting for row locks to be released, readers avoid accessing data of row versions whose validity period is contained within a time-range lock period for the row. Readers may be exposed to reading versions of rows that are locked for update by the database manager, because the lock period ending timestamp is changing in these rows. The possible allowable replacement values for these lock period ending timestamps are, however, bounded by the time-range lock period definition. Thus, for the purpose of deciding whether to access a row version, a row version with a lock period ending timestamp falling anywhere within a lock period for the row is interpreted as having a lock-period ending timestamp matching the end of the lock period for the row.

In one example, the lock period ending timestamp for any row version with a lock period ending timestamp greater than the start of a lock period for the row is interpreted as having the value "forever." The ability to compute a valid high value for the lock period ending timestamp shields the reader from a possibly uncommitted lock period ending timestamp value. Significantly, a reader accessing only row versions with lock period starting timestamps outside of the range lock period for the row can safely evaluate these row versions without acquiring row locks. Readers are not blocked by updaters, nor are updaters blocked by readers, as only the updaters are acquiring row locks.

Using the time-range locking method described, concurrency among updaters can be raised by the introduction of branching. By itself, branching of a temporal database is known, for example, to analyze alternate plans, over time, to meet projected transportation system demand levels. Each branch could represent a particular transportation plan and its possible outcome. In other words, time is treated as being multi-dimensional, rather than one-dimensional. A branched and temporal database allows concurrent timelines to proceed within separate branches of the database.

In accordance with an example, an updater of a row of a branched and temporal database, holding a time-range lock, blocks other updaters only to the extent of the row-locking mechanism of the underlying relational database manager. That is, updaters of rows having identical primary key values in the same branch are subject to waiting behind one another. However, updaters of rows having different primary key values are not forced to wait behind one another, nor are updaters of rows in different branches (even rows having the same primary key value) forced to wait behind one another.

For applications modifying a database using large transactions, or modifying the database in a manner creating temporary inconsistencies that should not be viewed by readers, the database remains available for reading regardless of the locking activity or temporary inconsistencies of the update processing.

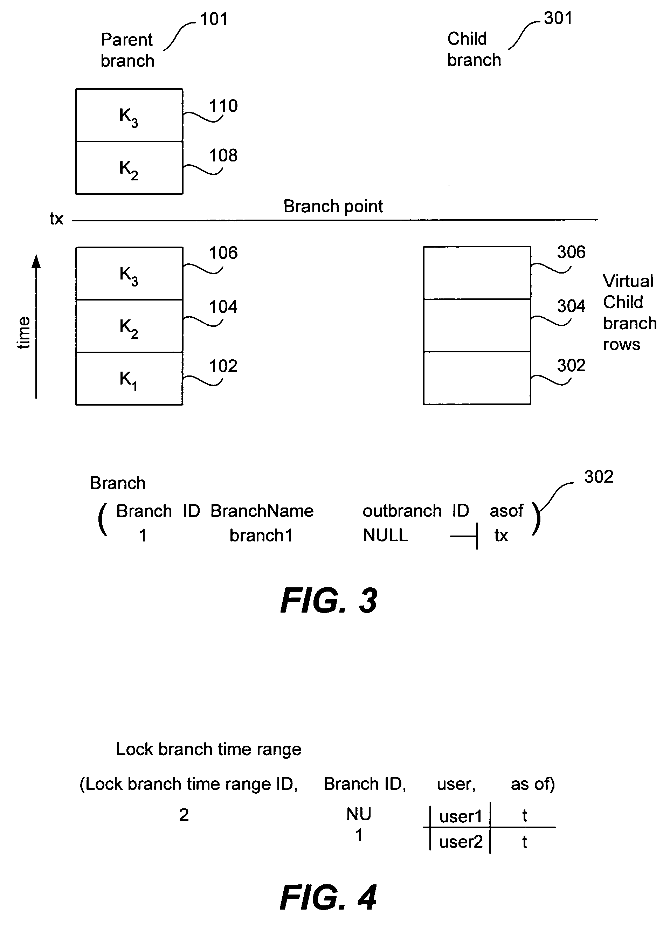

Branching is not necessarily a substitute for time-range locking. Figure 3 illustrates an example with a child branch 301 created off the root branch at time Tx. The example illustrated in Figure 1 is the root branch of the Figure 3 example. The child branch 301 shares the three row versions (i.e., 102, 104 and 106) from the parent branch 101 (in this case, the root branch) that existed at the time the child branch 301 is defined. It is immaterial when the branch is created; what is more significant is the time specified in the branch definition 302.

In the Figure 3 example, the three rows 102, 104 and 106 from the parent branch are not physically copied but, rather, are virtual members of the child branch 301. That is, a query qualified as against the child branch 301 should fetch these three inherited rows 102, 104 and 106 from the parent branch 101, but represent the inherited rows as existing in the child branch 301. In one example, this is accomplished by directing queries to an SQL view over the branched-and-temporal table. Because these three child branch 301 rows 302, 304 and 306 are physically stored only as rows of the parent branch 101, the rows 302, 304 and 306 are subject to the same locking behavior when the parent branch 101 is updated. From a row locking perspective, then, Figure 3 and Figure 1 are the same, because it is the physical rows that are locked.

Figure 4 shows the Lock_time_range table 202 of Figure 2, modified to include a field for a foreign key reference to the child branch 301 in Figure 3. The addition of the foreign key field (i.e., for a branch ID) allows different users to concurrently post overlapping time-ranges to a row, in different branches. Contention between updaters is localized to updaters processing within the same branch, if any. Updaters within different branches lock time-ranges with respect to the different branches, and so the updaters of rows in different branches do not contend with one another.

We now discuss some particular examples of steps for accomplishing the use of time-range lock periods, as discussed above.

First, we describe an example of steps to set up database structures to enable the use of time range lock periods.

### Steps involved in setting up the database structures:

1. Create a table for branch definitions.
2. Create a table for time-range lock definitions.
3. Add a foreign key to associate a time-range lock with a branch.
4. For each application table with a primary key:
   4.1. Add two timestamp columns to make the table into a valid-time structure with starting and ending timestamps.
   4.2. Add a foreign key column so that each row version can be associated with a branch.
   4.3. Modify the primary key constraint on the table to allow duplicate key values in non-overlapping time periods and/or separate branches.

Next, we describe an example of steps to create a new child branch.

### Steps involved in creating a new child branch:

1. Choose what will be the parent branch. Any existing branch can be designated as a parent branch for this procedure. The parent branch may default to being the root branch.
2. Create a new child branch of the parent branch, giving the new child branch an identifying name and a timestamp, and then insert the row into the Branch table. The timestamp in the branch definition is known as the *floor* of the branch.

Next, we describe two examples of steps to update user data:

### First example of steps involved in updating user data in a database (the time-range locks are read without acquiring locks):

1. Post a time-range lock for a specific branch or branches at the start of an update transaction. The lock is immediately visible to the reader, who is not acquiring locks. With respect to child branches, do not accept a time-range lock with a starting timestamp older than the branch's floor timestamp.
2. Update the database branch within the locked time-range.
3. Commit the updates.
4. Remove the time-range lock, now that the updates are stable.
5. Commit the removal of the time-range lock.

### Alternate example of steps involved in updating a database (the time-range locks are read while acquiring locks):

1. Post a time-range lock for a specific branch or branches at the start of an update transaction.
2. Commit the time-range lock, making the lock visible to the reader.
3. Update the database within the locked time-ranges.
4. Remove the time-range lock.
5. Commit the updates and the removal of the time-range lock.

Next, we describe an example of steps to read a database

### Steps involved in reading from the database:

1. Choose which branch to read (root branch is default).
2. Configure the reading application to use uncommitted read isolation (to not acquire read locks).
3. Computing query results:
   3.1. When querying within the root branch or any child branch, avoid rows created within the locked time-range of the branch (or locked time *ranges*). These rows are unavailable for reading. In one example, which records just the starting time of the locked time-range, the oldest lock-range starting timestamp for a given branch is interpreted as the *lock ceiling* of the branch. Only read rows older than the lock ceiling.
   3.2. When querying with respect to a child branch, avoid including (inheriting) rows from the parent branch (and its ancestors) created more recently than the child branch's floor.
   3.3. When querying a child branch, avoid including (inheriting) rows from the parent branch created at or above the lock ceiling of the parent branch, and similarly for any ancestor branches and their respective lock ceilings. These rows are unavailable for reading.

Alternatively, if read lock acquisition behavior can be more precisely controlled, locks could be acquired when reading the time-range lock definitions, with a corresponding alteration of the updating application, as noted in the earlier section.

Before concluding, we provide herewith a brief summary of the various time indications discussed herein:

First, from the perspective of a child branch, the branch definition is characterized by a timestamp (the branch floor). The branch contains only row versions newer than this branch floor timestamp. The chosen timestamp is arbitrary, though the typical branch time will either be the time that the branch is created, or some time in the near past (e.g., when the last accounting period closed). The branch floor does not change or go away with time-range locking activity.

A temporary time-range lock (or locks) could exist on the child branch, restricting the branch versions available for reading. The earliest lock-range timestamp is the lock ceiling for the branch. Rows created more recently than the lock ceiling are not yet eligible for reading. Because time-range locks are temporary, sometimes there will be no lock ceiling.

Ancestor rows are available for inheritance if the following conditions are met:
- A row may be eligible for inheritance from a parent branch (and ancestor branches) if the version starting timestamp precedes the respective child branch definition timestamp, and the ending timestamp succeeds the respective child branch timestamp.
- Eligibility for inheritance is subject to time-range locking within the parent branch (and ancestor branches). There is possibly a lock ceiling for each of the respective parent branches, if any temporary time-range locks are posted for those branches. Rows are eligible for reading if there are no time-range locks posted, or if the starting version timestamps in the rows precedes the lock ceiling of this parent branch.

We now provide a specific example, to illustrate the use of time-range locks relative to branching. Assume that branch A is a branch of the root. Branch A has a branch floor of Jan. 1, 2005, 2:15PM. Assume that branch B is a branch of branch A. Branch B has a branch floor of Jan 3, 2005, 3:35PM.

Ignoring time-range locks for the moment:
- The root branch includes only those rows created in the root branch.
- Branch A includes all the row versions created in branch A, plus branch A inherits row versions from the root branch which were created before Jan. 1, 2005, 2:15PM (the branch floor of branch A).
- Branch B includes all the row versions created in branch B, plus branch B inherits row versions from the branch A which were created before Jan 3, 2005, 3:35PM (the branch floor of branch B), including all row versions inherited by branch A from the root branch.

Now, accounting for time-range locks:
- Row versions eligible for reading by the root branch are those row versions which were created in the root branch before the earliest timestamp of the time-range locks posted for the root branch (the lock ceiling of the root branch).
- Row versions eligible for reading by branch A are those row versions which were created in branch A before the earliest timestamp of the time-range locks posted for branch A (the lock ceiling of branch A), plus those row versions inherited from the root branch which were created before Jan. 1, 2005, 2:15PM (branch floor of A) and before the earliest timestamp of the time-range locks posted for the root branch (the lock ceiling of the root branch).
- Row versions eligible for reading by branch B are those row versions which were created in branch B before the earliest timestamp of the time-range locks posted for branch B (the lock ceiling of branch B), plus those row versions inherited from branch A (created before created before Jan 3, 2005, 3:35PM, the branch floor of branch B) and before the earliest timestamp of the time-range locks posted for branch A (the lock ceiling of branch A), plus those row versions inherited from the root branch (created before Jan. 1, 2005, 2:15PM, the branch floor of branch A) and before the earliest timestamp of the time-range locks posted for the root branch (the lock ceiling of the root branch).

While this invention has been described in terms of several embodiments, there are alterations, permutations, and equivalents, which fall within the scope of this invention. It should also be noted that there are many alternative ways of implementing the methods and apparatuses of the present invention. It is therefore intended that the following appended claims be interpreted as including all such alterations, permutations, and equivalents as fall within the true spirit and scope of the present invention.

## Claims

1. A method of accessing a version of a row in a temporal database, comprising:
checking at least a timestamp associated with the version of the row against a lock criteria for the row version;
based on a result of the checking step, determining whether to access the version of the row; and
accessing the version of the row without acquiring a lock for the row.

2. The method of claim 1, wherein:
the lock criteria for the row version is a time range lock period for the row.

3. The method of claim 1, wherein:
the timestamp includes a starting period time stamp for the row version.

4. The method of claim 3, wherein:
the time lock criteria for the row version is a time range lock period for the row; and
checking at least a timestamp associated with the version of the row against a time criteria for the row includes checking whether the starting period timestamp for the row version is prior to the time range lock period.

5. The method of claim 2, wherein:
checking against the time range lock period for the row includes checking whether a starting period timestamp associated with the row version is outside the time range lock period.

6. The method of claim 2 or 5, wherein:
an ending period timestamp for the row version is treated as being an ending period of the time range lock period if the ending period timestamp of the row version is greater than the start of the time range lock period for the row.

7. The method of claim 1, wherein:
the row version is being accessed from a current branch, and
the lock criteria for the row version includes lock criteria associated with a branch, other than the current branch, from which the row version is inherited.

8. The method of claim 7, wherein:
the time criteria associated with the branch from which the row version is inherited includes a lock ceiling associated with the branch from which the row version is inherited.

9. The method of claim 7, wherein:
the branch from which the row version is inherited is an ancestor branch to the current branch, and
the row version has been created by the ancestor branch prior to the branch floor of the current branch.

10. The method of claim 9, wherein:
there is at least one intermediate branch between the current branch and the branch from which the row version is inherited; and
the row version has additionally been created prior to the branch floor of each of the at least one intermediate branch.

11. A method of configuring a temporal database, comprising:
providing a table for time-range lock definitions associated with rows of the database; and
for each application table in the database that uses primary keys:
providing at least one column of the application table configured for characterizing, for each row version for each primary key, a time range associated with that row version; and
providing a primary key constraint on the application table that allows, for each row, duplicate primary key values for versions of that row **characterized by** non-overlapping time ranges.

12. The method of claim 11, further comprising:
providing a foreign key to associate a time-range lock with a branch.
providing a foreign key column to associate each row version with a branch;
providing a primary key constraint on the table that allows, for each row, duplicate primary key values for that row for versions of that row **characterized by** being in different branches.

13. A method of providing a new version of a row of a database, comprising:
posting a time-range lock for the row;
performing the update of the row within a time indicated by the time-range lock; and
committing the updates.

14. The method of claim 13, wherein:
posting the time-range lock for the row includes making the time-range lock visible to readers of the row.

15. The method of claim 13, wherein:
if the new version of the row is in a child branch of the database, and the time-range lock is **characterized by** a starting timestamp older than a floor of the child branch, not accepting for posting the time-range lock for the row.

16. The method of claim 13 or 14, wherein:
posting the time range lock for the row includes posting a time range lock for a branch to which the version of the row belongs.
